# EUROPÄISCHE PATENTSCHRIFT

(11) **EP 1 556 255 B1**
(45) Veröffentlichungstag und Bekanntmachung des Hinweises auf die Patenterteilung: **18.06.2008**
(21) Anmeldenummer: 03747942.5
(22) Anmeldetag: 29.08.2003
(51) Int. Cl.: B60R 21/01

(54) **SENSOREINRICHTUNG UND VERFAHREN ZUR ERFASSUNG EINER ÄUSSEREN STOSSBELASTUNG AN EINEM FAHRZEUG**
SENSOR DEVICE AND METHOD FOR DETECTING AN EXTERNAL IMPACT LOAD ON A VEHICLE
DISPOSITIF DETECTEUR ET PROCEDE DE DETECTION D'UNE CHARGE EXTERNE DUE AUX CHOCS SUR UN VEHICULE AUTOMOBILE

(30) Priorität: 25.09.2002 DE 10244528
(43) Veröffentlichungstag der Anmeldung: 27.07.2005
(73) Patentinhaber: ACTS-Advanced Car Technology Systems GmbH & Co.KG, 63877 Sailauf (DE)
(72) Erfinder: BISCHOFF, Michael, 63768 Rottenberg (DE); DIEMER, Marc, 65205 Wiesbaden (DE); SCOTT, Matthew, 63808 Haibach (DE); HOISS, Franz, 82347 Bernried (DE); FIEDLER, Michael, 63599 Biebergemünd (DE)
(74) Vertreter: Pfiz, Thomas
(86) Internationale Anmeldenummer: PCT/EP2003/009592
(87) Internationale Veröffentlichungsnummer: WO 2004/033261

(56) Entgegenhaltungen:
- EP-A- 0 995 639
- DE-A- 10 023 588
- DE-C- 3 721 379
- FR-A- 2 671 525
- US-A1- 2002 063 008

## Beschreibung

Die Erfindung betrifft eine Sensoreinrichtung zur Erfassung einer äußeren Stoßbelastung an einem Fahrzeug, insbesondere bei einem Fußgängeraufprall, sowie ein entsprechendes Verfahren.

Die fortschreitenden Anforderungen an den Personenschutz im Kraftfahrzeugverkehr machen es erforderlich, kritische Situationen äußerst rasch und zuverlässig zu detektieren, um geeignete Schutzvorkehrungen treffen zu können. Insbesondere soll bei einer Kollision eines Kraftfahrzeugs mit einem Fußgänger auch die Aufprallschwere erkannt werden, um noch mögliche verletzungsmindernde Gegenmaßnahmen auslösen zu können. Problematisch ist es allerdings, den großen Bereich möglicher Aufprallstellen mit Einzelsensoren sicher zu erfassen, wobei unterschiedliche Einbaustellen die Absolutbewertung einer Unfallsituation weiter erschweren.

Die DE 100 23 588 A offenbart den Oberbegriff des Anspruchs 1.

Ausgehend hiervon liegt der Erfindung die Aufgabe zugrunde, eine Sensoreinrichtung und ein entsprechendes Sensierverfahren der vorstehend angegebenen Art dahingehend zu verbessern, dass eine selektive und sichere Aufprallerkennung bzw. Kollisionserfassung speziell in einer für die wirtschaftliche Massenfertigung geeigneten Bauform erreicht wird.

Zur Lösung dieser Aufgabe wird die in den unabhängigen Patentansprüchen jeweils angegebene Merkmalskombination vorgeschlagen. Vorteilhafte Ausgestaltungen und Weiterbildungen der Erfindung ergeben sich aus den abhängigen Ansprüchen.

Dementsprechend wird erfindungsgemäß vorgeschlagen, dass eine Sensoreinrichtung zur Erfassung einer äußeren Stoßbelastung an einem Fahrzeug, insbesondere bei einem Fußgängeraufprall, eine auf mechanische Verformung ansprechende Sensorleitung, einen die Sensorleitung aufnehmenden Tragkörper und eine mit der Sensorleitung zusammenwirkende Messeinheit zur Bereitstellung eines Stoßsignals umfasst, wobei der Tragkörper eine mit der Sensorleitung in Eingriff stehende Verformungsstruktur zur über die Länge der Sensorleitung abschnittsweise variierenden Druckkraftübertragung aufweist. Durch die Verwendung einer Sensorleitung ist es möglich, einen großen Außenbereich des Fahrzeugs abzutasten, ohne dass eine Vielzahl von Einzelfühlern erforderlich wäre. Durch die Anpassung der Kraftübertragung mittels einer Verformungsstruktur kann berücksichtigt werden, dass die Einbaubedingungen und damit die Kraftübertragungscharakteristik über die Geometrie des Fahrzeugs variieren.

Um die Kraftübertragung anzupassen, weist die Verformungsstruktur eine Mehrzahl von längs der Sensorleitung in ungleichmäßigen Abständen voneinander verteilt angeordneten Kraftübertragungsgliedern als Anpassungsmittel auf.

Vorteilhafterweise wird über die Verformungsstruktur die Signaldurchleitung in der Sensorleitung bei einer Stoßbelastung durch mechanische Verformung beeinflusst.

Für eine Auswertung der Signalhöhe ist es von Vorteil, wenn die Druckkraftübertragung über längs der Sensorleitung angeordnete Anpassungsmittel an die Belastungsfestigkeit der umgebenden Fahrzeugteile anpassbar ist.

Eine besonders bevorzugte Ausführung sieht vor, dass die Druckkraftübertragung so angepasst ist, dass das Stoßsignal bei gegebener Stoßbelastung unabhängig von der Belastungsstelle bleibt. Auf diese Weise ist es möglich, die Aufprallstärke ortsunabhängig mit geringer Fehlerrate auszuwerten.

Zur lokalen Modifizierung der Sensorempfindlichkeit ist es auch vorteilhaft, wenn der Tragkörper durch Änderungen im Querschnitt oder in der Materialdichte oder durch Durchbrüche oder Ausnehmungen oder dergleichen Anpassungsmittel eine unregelmäßig veränderliche Biegesteifigkeit längs der Sensorleitung aufweist.

Eine vorteilhafte Ausgestaltung sieht vor, dass der Tragkörper einen elastisch verformbaren Abstandhalter mit längs der Sensorleitung variierender Elastizität aufweist. Dies kann dadurch realisiert werden, dass mindestens ein längs der Sensorleitung verlaufender, unter Querbelastung bieg- oder knickbarer Längssteg vorgesehen ist, wobei der Längssteg eine variable Wanddicke oder Wandschwächung zur Anpassung seiner Quersteifigkeit aufweist.

Für die Signalerzeugung ist es vorteilhaft, wenn die Verformungsstruktur unter lokaler Biegebeanspruchung auf die Sensorleitung einwirkt.

Für eine ortsauflösende Erfassung ist es von Vorteil, wenn mehrere Sensorleitungen nebeneinander angeordnet sind. In vorteilhafter Ausgestaltung ist es vorgesehen, dass mehrere Sensorleitungen mit der Verformungsstruktur in Eingriff befindliche Wirkabschnitte und außer Eingriff befindliche Blindabschnitte besitzen. Um die Ortsauflösung zu verfeinern, ist es vorteilhaft, wenn die Länge der Abschnitte leitungsweise unterschiedlich ist. Eine weitere Verbesserung sieht vor, dass die Länge der Wirk- und Blindabschnitte bezüglich einer Reihe von Sensorleitungen in einem festen Verhältnis abnimmt.

Vorteilhafterweise besitzt die Verformungsstruktur zwei kammartig ausgebildete Verformungskörper, wobei die Sensorleitung vorzugsweise linear zwischen den bei Stoßbelastung ineinander greifenden Verformungskörpern verläuft.

Herstellungs- und messtechnisch ist es vorteilhaft, wenn die Sensorleitung durch mindestens eine Lichtleitfaser gebildet ist. Grundsätzlich sind auch andere Fühler denkbar, beispielsweise piezoelektrisch, pneumatisch oder hydraulisch arbeitende Aufnehmerleitungen bzw. Kabel.

Zur Lichteinspeisung und -auskopplung an einer Schnittstelle ist es von Vorteil, wenn die bzw. jede Sensorleitung zwei nebeneinander verlaufende, vorzugsweise über eine Schlaufe durchgehend verbundene Leitungsabschnitte aufweist.

In verfahrensmäßiger Hinsicht wird die eingangs genannte Aufgabe dadurch gelöst, dass ein Stoßsignal durch eine auf mechanische Verformung ansprechende Sensorleitung erzeugt wird, wobei die Druckkraftübertragung auf die Sensorleitung durch eine Verformungsstruktur lokal variiert wird, so dass das Messsignal bei gegebener Stoßbelastung unabhängig von der Belastungsstelle bleibt.

Eine weitere vorteilhafte Maßnahme besteht darin, dass Licht in eine Lichtleitfaser einer Sensoreinrichtung eingespeist wird und durch Biegeradiusänderungen die Lichtdurchleitung in der Lichtleitfaser beeinflusst wird, wobei eine Signaländerung des aus der Lichtleitfaser ausgekoppelten Lichtsignals als Stoßsignal ausgewertet wird.

Im Folgenden wird die Erfindung anhand der in der Zeichnung in schematischer Weise dargestellten Ausführungsbeispiele näher erläutert. Es zeigen
- Fig. 1: ein Kraftfahrzeug mit einer im Stoßfänger integrierten Sensoreinrichtung zur Erfassung eines Fußgängeraufpralls in schaubildlicher Darstellung;
- Fig. 2: einen ausschnittsweisen Vertikalschnitt der Fig. 1;
- Fig. 3: die Sensoreinrichtung in abgebrochenem Längsschnitt;
- Fig. 4: einen Schnitt entlang der Schnittlinie 4-4 der Fig. 3;
- Fig. 5: den Signalverlauf eines mit der Sensoreinrichtung erfassten Stosssignals;
- Fig. 6 und 7: weitere Ausführungsformen eines Tragkörpers der Sensoreinrichtung in einer Fig. 4 entsprechenden Darstellung; und
- Fig. 8: eine Sensoreinrichtung mit einer Mehrzahl von Sensorleitungen in einer schematischen Ansicht.

Die in der Zeichnung dargestellte Sensoreinrichtung 10 kann allgemein zur Erfassung einer äußeren Stoßbelastung an einem Fahrzeug 12 eingesetzt werden und dient insbesondere zur Erfassung eines Fußgängeraufpralls. Die Sensoreinrichtung umfasst zu diesem Zweck eine Sensorleitung 14, einen die Sensorleitung aufnehmenden langgestreckten Tragkörper 16, eine in dem Tragkörper enthaltene Verformungsstruktur 18 und eine mit der Sensorleitung zusammenwirkende Messeinheit 20 zur Bereitstellung eines Mess- bzw. Stoßsignals.

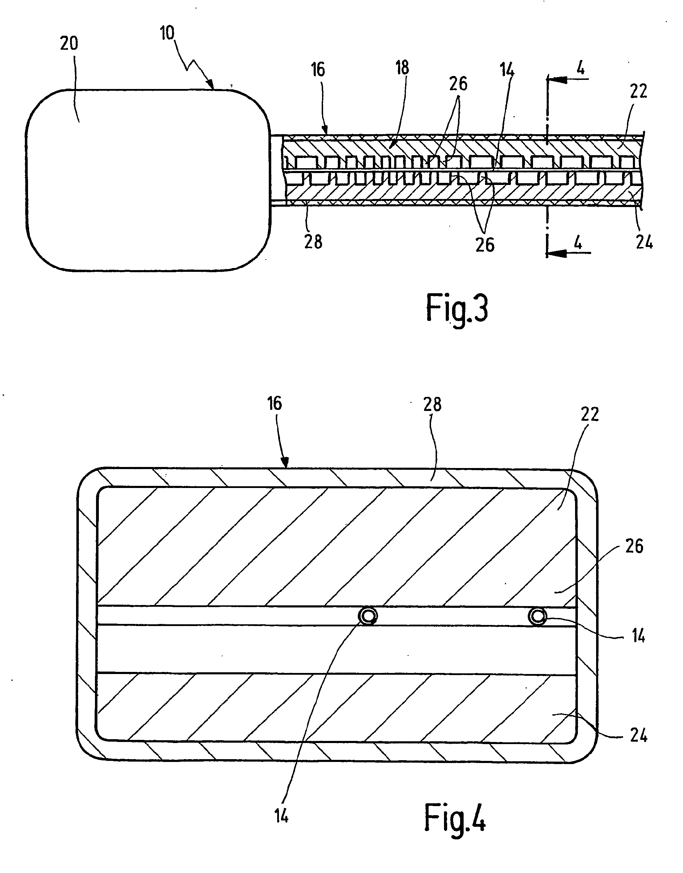

Wie insbesondere aus Fig. 3 und 4 ersichtlich, weist die Verformungsstruktur 18 zwei kammartige ausgebildete Teilstücke 22, 24 auf, welche bei einer äußeren Krafteinwirkung unter lokaler Biegebeanspruchung der linearen Sensorleitung 14 begrenzt gegeneinander bewegbar sind. Die Biegebeanspruchung wird dabei durch seitlich an der Sensorleitung 14 angreifende Kraftübertragungsglieder 26 erreicht, die über die Länge der Sensorleitung in unregelmäßigen Abständen verteilt angeordnet sind. Durch eine entsprechende Variation der gegenseitigen Abstände dieser Anpassungsmittel kann die Kraftübertragung lokal an die Festigkeit der umgebenden Fahrzeugteile angepasst werden, so dass bei gegebener äußerer Belastung ein gleich bleibender Verformungsgrad unabhängig von der Belastungsstelle erhalten wird.

Die Sensorleitung 14 ist durch eine Lichtleitfaser bzw. ein Glasfaserkabel gebildet, das zwei parallel zueinander verlaufende, an dem in Fig. 3 nicht gezeigten Ende beispielsweise über eine Schlaufe durchgehend verbundene Faserabschnitte aufweist. Deren Lichteintritts- und Lichtaustrittsenden sind mit der opto-elektronischen Messeinheit 20 gekoppelt. In der Messeinheit 20 kann auch die Auswertesoftware geladen sein, so dass kein separates Steuergerät mehr notwendig ist. Die gesamte Anordnung ist in einer Aufnahmehülle 28 dicht eingegossen und lässt sich so einfach in das Fahrzeug 12 integrieren. Möglich ist es auch, dass die Sensorleitung 14 weitere nicht gezeigte Lichtleitkabel aufweist, welche beispielsweise für Referenzmessungen genutzt werden.

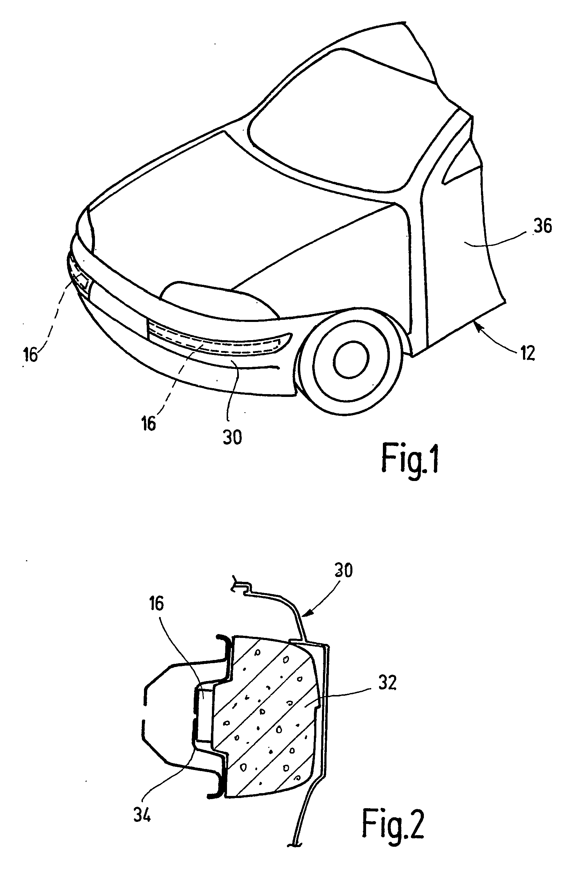

In der in Fig. 1 und 2 gezeigten Einbausituation verläuft die Sensorleitung 14 entlang dem Frontstoßfänger 30 des Fahrzeugs 12, wobei der Tragkörper 16 zwischen einem vorderseitigen Absorberkörper 32 und einem rückseitigen Querträger 34 eingeschlossen ist. Denkbar ist es auch, die Sensoreinrichtung 10 in einen Hohlraum einer Seitentür 36 einzubauen, um einen Seitencrash zu erfassen. Eine andere Anwendung könnte darin bestehen, eine Einklemmsituation im Bereich von elektrisch betätigten Seitenscheiben oder im Bereich des Schiebedachs zu erkennen.

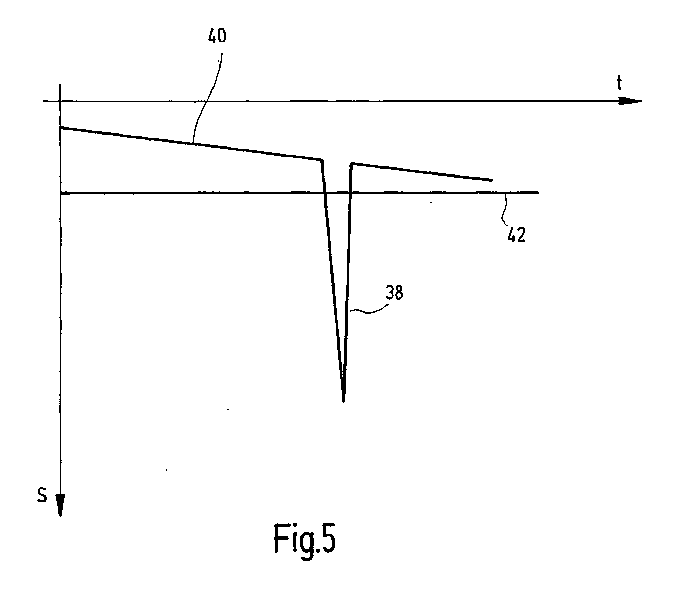

Bei einer äußeren Druckbelastung bzw. Stoßeinwirkung wird an der betreffenden Belastungsstelle die Lichtleitfaser 14 durch die Übertragungsglieder 26 der Verformungsstruktur 18 wellenförmig gebogen, so dass das hindurchgeleitete Messlicht eine Intensitätsänderung bzw. Dämpfung erfährt. Wie in Fig. 5 gezeigt, ergibt sich entsprechend dem Ausmaß der momentanen Verformung ein (negativer) Signalpeak 38 im Signalverlauf. Dessen Amplitude dient als Maß für die Aufprallstärke. Dabei wird durch die an die Einbauverhältnisse angepasste Gestaltung der Verformungsstruktur 18 eine Absolutwerterfassung ermöglicht.

Bei allen Ausführungsformen ist es möglich, den Signalverlauf 40 außerhalb des Signalpeaks 38 zur kontinuierlichen Selbstdiagnose der Sensoreinrichtung 10 zu nutzen. In diesem Langzeitbereich tritt ein systembedingter Dämpfungsanteil auf, der abhängig von der Temperatur, der Vorlast und weiteren Aufbauparametern eine in Fig. 5 übertrieben dargestellte Drift verursacht. Während die dynamischen Signale 38 in Sekundenbruchteilen auftreten, liegt die Zeitskala der Signaldrift deutlich darüber. Der langsam veränderliche Signalpegel wird mit einem vorgegebenen Schwellenwert 42 verglichen, bei dessen Überschreiten ein Sensorfehler diagnostiziert wird. Dabei ist es vorteilhaft, wenn der Schwellenwert 42 in Abhängigkeit von dem maximal zu erfassenden dynamischen Signal so gewählt wird, dass stets im Wesentlichen die volle Peakamplitude detektiert werden kann. Der Schwellenwert muss dabei nicht konstant gehalten werden, sondern kann auch beispielsweise in Abhängigkeit von Betriebs- und Umweltparametern nachgeführt werden.

In einer alternativen Ausführungsform ist es vorgesehen, dass der Tragkörper die Glasfaserleitung bzw. Lichtleitfaser 14 unmittelbar umschließt und bei mechanischer Verformung die Mantelbrechzahl und damit die Durchleitung bzw. Dämpfung des Lichtsignals in der Glasfaserleitung beeinflusst.

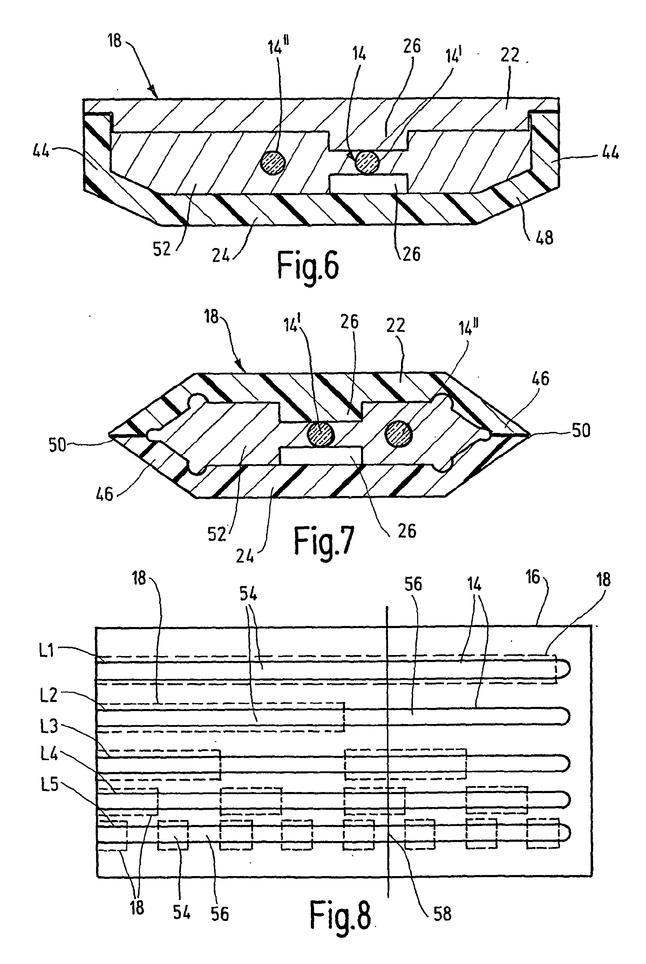

Die in Fig. 6 und 7 gezeigten Ausführungsbeispiele unterscheiden sich von der Ausführungsform gemäß Fig. 3 und 4 dadurch, dass die kammartig ineinander greifenden Kraftübertragungsglieder 26 im gleichen Abstand voneinander angeordnet sind, während die seitlichen Verbindungswände 44, 46 an den Verformungskörpern 22,24 als elastische Abstandshalter mit gegebenenfalls variabler Steifigkeit wirken. Auf diese Weise kann die Kraftübertragung längs des Lichtleiters 14 variabel eingestellt werden. Entsprechend Fig. 6 wirkt hierbei die Wandschräge 48 ähnlich einer Blattfeder, um den Messbereich anzupassen. In Fig. 7 sind zu diesem Zweck die an der Klebestelle 50 verbundenen Seitenwandungen 46 seitlich elastisch ausknickbar. In beiden Fällen ist nur ein Leitungsabschnitt 14' einer Verformung unterworfen, wohingegen der über eine Schlaufe zurückgeführte Abschnitt 14" in einer beispielsweise geschäumten Vergussmasse 52 unverformt bleibt.

Zur ortsaufgelösten Detektion können gemäß Fig. 8 mehrere parallel zueinander verlaufende Lichtleitkabel 14 als Leitungsreihe (L1 - L5) vorgesehen sein, wobei die Reihenglieder abschnittsweise mit der Verformungsstruktur 18 in Eingriff stehende Wirkabschnitte 54 und davon beispielsweise über eine nicht gezeigte Abdeckung unbeeinflusste Blindabschnitte 56 aufweisen. Um die Positionserkennung zu verfeinern, stehen die Wirkabschnitte von jeweils zwei Reihengliedern (L1,L2; L2,L3...) im Längenverhältnis von 2:1. Bei der in Fig. 8 gezeigten Verteilung lässt sich dann eine Krafteinwirkung beispielsweise im Bereich des Längsabschnitts 58 durch ein gleichzeitiges Signal der Leitungen L1, L3 und L4 bei fehlendem Signal der übrigen Leitungen erkennen.

Zur Erfassung eines Fußgängeraufpralls sollte die Sensorleitung bzw. das Leitungsbündel weit vorne am Fahrzeug verlaufen, um den Aufprall möglichst frühzeitig zu erfassen. Außerdem muss ein geringes Kraftniveau erfassbar sein, um eine Fußgängerkollision von einem harten Aufprall auf feste Gegenstände unterscheiden zu können. Die Sensoreinrichtung kann auch eingesetzt werden, um aus der frühzeitigen Aufprallerfassung Signale an Sicherheitseinrichtungen wie Airbags und Crashboxen weiterzuleiten. Speziell ist es auch möglich, die Crashboxen so einzustellen, dass sie bei einem Fußgängeraufprall weich und bei einem andersartigen Aufprall härter eingestellt werden. Hierbei sollte die weiche Einstellung als Voreinstellung gewählt werden, um den Fußgänger mit Vorrang zu schützen.

## Patentansprüche

1. Sensoreinrichtung zur Erfassung einer äußeren Stoßbelastung an einem Fahrzeug (12), insbesondere bei einem Fußgängeraufprall, mit mindestens einer auf mechanische Verformung ansprechenden Sensorleitung (14), einem die Sensorleitung (14) aufnehmenden Tragkörper (16) und einer mit der Sensorleitung (14) zusammenwirkenden Messeinheit (20) zur Bereitstellung eines Stoßsignals, wobei der Tragkörper (16) eine mit der Sensorleitung (14) in Eingriff stehende Verformungsstruktur (18) aufweist, **dadurch gekennzeichnet, dass** die Verformungsstruktur (18) zur abschnittsweise variablen Druckkraftübertragung eine Mehrzahl von längs der Sensorleitung (14) in ungleichmäßigen Abständen voneinander verteilt angeordneten Kraftübertragungsgliedern (26) aufweist.

2. Sensoreinrichtung nach Anspruch 1, **dadurch gekennzeichnet, dass** die Verformungsstruktur (18) die Signaldurchleitung in der Sensorleitung (14) bei einer Stoßbelastung beeinflusst.

3. Sensoreinrichtung nach Anspruch 1 oder 2, **dadurch gekennzeichnet, dass** die Druckkraftübertragung über längs der Sensorleitung (14) angeordnete Anpassungsmittel (26;44,46) an die Belastungsfestigkeit der umgebenden Fahrzeugteile (32) anpassbar ist.

4. Sensoreinrichtung nach einem der Ansprüche 1 bis 3, **dadurch gekennzeichnet, dass** die Druckkraftübertragung so angepasst ist, dass das Stoßsignal bei gegebener Stoßbelastung unabhängig von der Belastungsstelle bleibt.

5. Sensoreinrichtung nach einem der Ansprüche 1 bis 4, **dadurch gekennzeichnet, dass** der Tragkörper (16) durch Änderungen im Querschnitt oder in der Materialdichte oder durch Durchbrüche oder Ausnehmungen oder dergleichen Anpassungsmittel eine unregelmäßig veränderliche Biegesteifigkeit längs der Sensorleitung (14) aufweist.

6. Sensoreinrichtung nach einem der Ansprüche 1 bis 5, **gekennzeichnet durch** dass der Tragkörper (16) einen elastisch verformbaren Abstandshalter (44,46) mit längs der Sensorleitung (14) variierender Elastizität aufweist.

7. Sensoreinrichtung nach einem der Ansprüche 1 bis 6, **dadurch gekennzeichnet, dass** der Tragkörper (16) mindestens einen längs der Sensorleitung (14) verlaufenden, unter Querbelastung bieg- oder knickbaren Längssteg (44,46) aufweist.

8. Sensoreinrichtung nach Anspruch 7, **dadurch gekennzeichnet, dass** der Längssteg (44,46) eine variable Wanddicke oder Wandschwächung zur Anpassung seiner Quersteifigkeit aufweist.

9. Sensoreinrichtung nach einem der Ansprüche 1 bis 8, **dadurch gekennzeichnet, dass** die Verformungsstruktur (18) unter lokaler Biegebeanspruchung auf die Sensorleitung (14) einwirkt.

10. Sensoreinrichtung nach einem der Ansprüche 1 bis 9, **dadurch gekennzeichnet, dass** mehrere Sensorleitungen (14) nebeneinander angeordnet sind.

11. Sensoreinrichtung nach einem der Ansprüche 1 bis 10, **dadurch gekennzeichnet, dass** mehrere Sensorleitungen (L1-L5) mit der Verformungsstruktur (18) in Eingriff befindliche Wirkabschnitte (54) und außer Eingriff befindliche Blindabschnitte (56) aufweisen.

12. Sensoreinrichtung nach Anspruch 11, **dadurch gekennzeichnet, dass** die Länge der Abschnitte (54,56) im Vergleich zwischen den Sensorleitungen (14) unterschiedlich ist.

13. Sensoreinrichtung nach Anspruch 11 oder 12, **dadurch gekennzeichnet, dass** die Länge der Wirk- und Blindabschnitte (54,56) bezüglich einer Reihe (L1-L5) von Sensorleitungen (14) in einem festen Verhältnis abnimmt.

14. Sensoreinrichtung nach einem der Ansprüche 1 bis 13, **dadurch gekennzeichnet, dass** die Verformungsstruktur (18) zwei kammartig ausgebildete Verformungskörper (22,24) aufweist, und dass die Sensorleitung (14) zwischen den bei Stoßbelastung ineinander greifenden Verformungskörpern (22,24) verläuft.

15. Sensoreinrichtung nach einem der Ansprüche 1 bis 14, **dadurch gekennzeichnet, dass** die Sensorleitung durch mindestens eine Lichtleitfaser (14) gebildet ist.

16. Sensoreinrichtung nach einem der Ansprüche 1 bis 15, **dadurch gekennzeichnet, dass** die Sensorleitung (14) zwei nebeneinander verlaufende, vorzugsweise über eine Schlaufe durchgehend verbundene Leitungsabschnitte (14',14") aufweist.

17. Verfahren zur Erfassung einer äußeren Stoßbelastung an einem Fahrzeug (12), insbesondere bei einem Fußgängeraufprall, bei welchem ein Stoßsignal durch eine auf mechanische Verformung ansprechende Sensorleitung (14) erzeugt wird, wobei die Druckkraftübertragung auf die Sensorleitung (14) durch eine Verformungsstruktur (18) lokal variiert wird und die Verformungsstruktur (18) zur abschnittsweise variablen Druckkraftübertragung eine Mehrzahl von längs der Sensorleitung (14) in ungleichmäßigen Abständen voneinander verteilt angeordneten Kraftübertragungsgliedern (26) aufweist, so dass das Stoßsignal bei gegebener Stoßbelastung unabhängig von der Belastungsstelle bleibt.

18. Verfahren nach Anspruch 17, **dadurch gekennzeichnet, dass** Licht in eine Lichtleitfaser (14) einer Sensoreinrichtung (10) eingespeist wird und durch Biegeradiusänderungen die Lichtdurchleitung in der Lichtleitfaser (14) beeinflusst wird, und dass eine Signaländerung des aus der Lichtleitfaser ausgekoppelten Lichtsignals als Stoßsignal ausgewertet wird.

## Claims

1. Sensor device for detecting an external impact load on a vehicle (12), in particular in the case of a pedestrian impact, with at least one sensor line (14) responsive to a mechanical deformation, a carrier body (16) receiving the sensor line (14), and a measuring unit (20) cooperating with the sensor line (14) for providing an impact signal, wherein the carrier body (16) includes a deformation structure (18) in engagement with the sensor line (14), **characterised in, that** the deformation structure (18) for segment wise variable pressure force transmission includes a number of force transmission elements (26) distributed along the sensor line (14) in uneven separation from each other provided along the length of the sensor line (14).

2. Sensor device according to Claim 1, **characterised in, that** the deformation structure (18) influences the signal transmission in the sensor line (14) in the case of an impact.

3. Sensor device according to Claim 1 or 2, **characterised in, that** the pressure force transmission is adaptable to the impact resistance of the surrounding vehicle part (32) via adaptation means (26; 44, 46) provided along the length of the sensor line (14).

4. Sensor device according to one of Claims 1 through 3, **characterized in, that** the pressure force transmission is so adapted, that the impact signal in the case of a predetermined impact load remains constant independent of the point of impact.

5. Sensor device according to one of Claims 1 through 4, **characterized in, that** the carrier body (16) exhibits an irregular changeable bending resistance or stiffness along the sensor line (14) as a result of changes in the cross section or in the material density or as a result of breakthroughs or recesses or the like as adaptation means.

6. Sensor device according to one of Claims 1 through 5, **characterized in, that** the carrier body (16) includes an elastically deformable spacer (14, 16) with elasticity varying along the sensor line (14).

7. Sensor device according to one of Claims 1 through 6, **characterised in, that** the carrier body (16) includes at least one longitudinal bar (44, 46), bendable or buckling under transverse load, running along the sensor line (14).

8. Sensor device according to Claim 7, **characterised in, that** the longitudinal bar (44, 46) includes a variable wall thickening or wall weakening for adaptation of its transverse stiffness.

9. Sensor device according to one of Claims 1 through 8, **characterised in, that** the deformation structure (18) acts upon the sensor line (14) upon exposure to local bending forces.

10. Sensor device according to one of Claims 1 through 9, **characterised in, that** multiple sensor lines (14) are provided next to each other.

11. Sensor device according to one of Claims 1 through 10, **characterised in, that** multiple sensor lines (LI-L5) include active segments (54) in engagement with the deformation structure (18) and blind segments (56) not in engagement.

12. Sensor device according to Claim 11, **characterised in, that** the length of the segments (54, 56) varies for different sensor lines (14).

13. Sensor device according to Claim 11 or 12, **characterised in, that** the length of the active and blind segments (54, 56) for each row (LI-L5) of sensor lines (14) decreases at a fixed ratio.

14. Sensor device according to one of Claims 1 through 13, **characterized in, that** the deformation structure (18) includes two comb like deformation bodies (22, 24), and that the sensor line (14) runs between the deformation bodies (22, 24) which engage in each other upon impact.

15. Sensor device according to one of Claims 1 through 14, **characterized in, that** the sensor line includes at least one optical fiber (14).

16. Sensor device according to one of claims 1 through 15, **characterized in, that** the sensor line (14) includes two conductor or guide segments (14', 14") running side by side and continuously connected, preferably via a loop,

17. Process for detecting an external impact load on a vehicle (12), in particular in the case of a pedestrian impact, wherein an impact signal is produced by a sensor line (14) responsive to a mechanical deformation, wherein the force transmission on the sensor line (14) is locally varied by a deformation structure (18), so that the impact signal in the case of a predetermined impact load remains the same independent of the impact point.

18. Process according to Claim 18, **characterized in, that** light is introduced into an optical fiber (14) of a sensor device (10) and that the light transmissivity in the optical fiber (14) is influenced by changes in the radius of bend, and that a signal change of the light signal derived from the optical fiber is evaluated as impact signal.

## Revendications

1. Dispositif de détection destiné à détecter sur un véhicule (12) la sollicitation par un choc extérieur, en particulier en cas de collision avec un piéton, et qui présente au moins un conducteur de détection (14) qui réagit à une déformation mécanique, un corps de support (16) qui reprend le conducteur de détection (14) et une unité de mesure (20) qui coopère avec le conducteur de détection (14) pour délivrer un signal de percussion, le corps de support (16) présentant une structure de déformation (18) qui engage le conducteur de détection (14),
**caractérisé en ce que**
la structure de déformation (18) présente plusieurs organes (26) de transfert de force répartis à différentes distances les uns des autres le long du conducteur de détection (14) pour transmettre par portion des forces de poussée variables d'un tronçon à l'autre.

2. Dispositif de détection selon la revendication 1, **caractérisé en ce que** la structure de déformation (18) agit sur le passage du signal dans le conducteur de détection (14) en cas de sollicitation par un choc.

3. Dispositif de détection selon les revendications 1 ou 2, **caractérisé en ce que** le transfert d'une force de poussée peut être adapté par des moyens d'adaptation (26; 44, 46) disposés le long du conducteur de détection (14) à la résistance aux sollicitations des parties environnantes (32) du véhicule.

4. Dispositif de détection selon l'une des revendications 1 à 3, **caractérisé en ce que** la transmission des forces de poussée est adaptée de telle sorte que pour une sollicitation de percussion donnée, le signal de percussion reste indépendant de l'emplacement de la sollicitation.

5. Dispositif de détection selon l'une des revendications 1 à 4, **caractérisé en ce que** le corps de support (16) présente le long du conducteur de détection (14) une rigidité en flexion qui varie de manière irrégulière grâce à des modifications de sa section transversale, de la densité du matériau, à des perforations, des découpes ou des moyens d'adaptation similaires.

6. Dispositif de détection selon l'une des revendications 1 à 5, **caractérisé en ce que** le corps de support (16) présente un écarteur (44, 46) élastiquement déformable dont l'élasticité varie le long du conducteur de détection (14).

7. Dispositif de détection selon l'une des revendications 1 à 6, **caractérisé en ce que** le corps de support (16) présente au moins une traverse longitudinale (44, 46) apte à fléchir ou à se couder sous une sollicitation transversale et qui s'étend le long du conducteur de détection (14).

8. Dispositif de détection selon la revendication 7, **caractérisé en ce que** la traverse longitudinale (44, 46) présente une paroi d'épaisseur variable ou un affaiblissement de sa paroi en vue de l'adaptation de sa rigidité transversale.

9. Dispositif de détection selon l'une des revendications 1 à 8, **caractérisé en ce que** la structure de déformation (18) agit sur le conducteur de détection (14) sous une sollicitation locale en flexion.

10. Dispositif de détection selon l'une des revendications 1 à 9, **caractérisé en ce que** plusieurs conducteurs de détection (14) sont disposés les uns à côté des autres.

11. Dispositif de détection selon l'une des revendications 1 à 10, **caractérisé en ce que** plusieurs conducteurs de détection (L1-L5) présentent des tronçons actifs (54) engagés sur la structure de déformation (18) et des tronçons aveugles (56) qui n'y sont pas engagés.

12. Dispositif de détection selon la revendication 11, **caractérisé en ce que** la longueur des tronçons (54, 56) est différente de celle qui prévaut entre les conducteurs de détection (14).

13. Dispositif de détection selon les revendications 11 ou 12, **caractérisé en ce que** la longueur des tronçons actifs et des tronçons aveugles (54, 56) diminue dans un rapport fixe dans une série (L1-L5) de conducteurs de détection (14).

14. Dispositif de détection selon l'une des revendications 1 à 13, **caractérisé en ce que** la structure de déformation (18) présente deux corps de déformation (22, 24) configurés en peigne et **en ce que** le conducteur de détection (14) s'étend entre les corps de déformation (22, 24) qui s'engagent l'un dans l'autre en cas de sollicitation par percussion.

15. Dispositif de détection selon l'une des revendications 1 à 14, **caractérisé en ce que** le conducteur de détection est formé par au moins une fibre (14) conductrice de lumière.

16. Dispositif de détection selon l'une des revendications 1 à 15, **caractérisé en ce que** le conducteur de détection (14) présente deux tronçons de conducteurs (14', 14") qui s'étendent l'un à côté de l'autre et qui sont reliés de manière conductrice, de préférence par une boucle.

17. Procédé de détection d'une sollicitation extérieure par percussion sur un véhicule (12), en particulier en cas de collision avec un piéton, dans lequel un signal de percussion est formé par un conducteur de détection (14) qui répond à une déformation mécanique, la transmission de la force de poussée sur le conducteur de détection (14) étant rendue localement variable par une structure de déformation (18) et la structure de déformation (18) présentant pour transmettre de manière variable d'un tronçon à l'autre une force de poussée plusieurs organes (26) de transmission de force répartis à des distances différentes les uns des autres le long du conducteur de détection (14), de telle sorte que pour une sollicitation de percussion donnée, le signal de percussion soit indépendant de l'emplacement de la sollicitation.

18. Procédé selon la revendication 17, **caractérisé en ce que** de la lumière est injectée dans une fibre (14) conductrice de la lumière d'un dispositif de détection (10), **en ce que** des modifications du rayon de flexion agissent sur le passage de la lumière dans la fibre (14) conductrice de lumière et **en ce qu'**une modification du signal lumineux extrait de la fibre conductrice de lumière est évaluée comme signal de percussion.
